# EUROPEAN PATENT SPECIFICATION

(11) **EP 2 686 147 B1**
(45) Date of publication and mention of the grant of the patent: **06.04.2016**
(21) Application number: 12760323.1
(22) Date of filing: 16.03.2012
(51) Int. Cl.: B27B 17/14, F16D 41/20

(54) **CHAINSAW WITH GUIDE BAR CLAMPING AND CHAIN TENSIONING ASSEMBLY**
KETTENSÄGE MIT FÜHRUNGSSCHIENENKLEMME UND KETTENSPANNANORDNUNG
TRONÇONNEUSE DOTÉE D'UN ENSEMBLE DE SERRAGE DE BARRE DE GUIDAGE ET DE TENDEUR DE CHAÎNE

(30) Priority: 18.03.2011 WO PCT/EP2011/054159
(43) Date of publication of application: 22.01.2014
(73) Proprietor: Husqvarna AB, 56182 Huskvarna (SE)
(72) Inventor: MAAG, Markus, D-89231 Neu-Ulm (DE); SCHIEDT, Christoph, D-88483 Burgrieden (DE); KÜRNER, Denis, 79199 Kirchzarten (DE); COOK, Trent, Anderson, South Carolina 29621 (US); RICHER, Andrew, Huntersville, North Carolina 28078 (US)
(74) Representative: Valea AB
(86) International application number: PCT/US2012/029419
(87) International publication number: WO 2012/129085

(56) References cited:
- EP-A2- 1 281 489
- EP-A2- 1 764 197
- EP-A2- 2 036 688
- US-A- 5 491 899
- US-A- 5 491 899
- US-A- 5 522 143
- US-A- 5 522 143
- US-A- 5 896 670
- US-A1- 2010 293 797
- US-A1- 2010 293 797
- US-B2- 6 782 627

## Description

### TECHNICAL FIELD

Example embodiments relate to a chainsaw provided with means for tensioning the saw chain.

### BACKGROUND

A chainsaw with a tensioning/clamping device is disclosed in published patent application EP2036688. EP2036688 teaches a device being operatively associated with a guide bar in such a manner that turning of a tensioning knob implies a predetermined tension to a saw chain and then clamping of the guide bar to a body portion of a chainsaw. A converting means including a scroll wheel and a tensioning plate are described, which converts the rotational movement of the tensioning knob into linear movement of the guide bar. The rotational movement of the knob is transferred to the converting means via a slip clutch. The slip clutch, however, has an operating tolerance associated with its function. This for example is 2.5 Nm - 3.0 Nm. Once the chain is in tension it resists the torque of the tightening knob such that the clutch slips within these limits. Thus, with continued rotation of the knob after the predetermined tension has been reached no further increase in torque is transmitted to the guide bar via the clutch. From the above follows that when clamping the guide bar to the body portion by means of the knob, the operator simultaneously has to apply torque associated with the operating tolerance of the slip clutch, approximately. 2.5 Nm-3.0 Nm and torque associated with tightening. This is not very favorable for the operator as he will experience a high level of resistance tightening the knob.

Accordingly, there is a need for an arrangement providing a chain tensioning and guide bar clamping assembly which is more comfortable for the operator.

US 2010/02937 97 discloses the preamble of claim 1.

### BRIEF SUMMARY OF SOME EXAMPLES

Some example embodiments may therefore provide a chain tensioning mechanism which is easy to operate without using any tools. The chain tensioning mechanism is connected to a cover portion which in turn is attached to a chainsaw body. A guide bar may be secured between the cover portion and the chainsaw body. Accordingly, some embodiments may solve or at least reduce the problems discussed above. In particular, some embodiments may provide a chainsaw having a tensioning and clamping device providing a simpler and less strenuous tightening and clamping operation.

In one example embodiment, a chainsaw is provided. The chainsaw includes a chainsaw body, a chainsaw bar configured to be operably coupled to a cutting chain, and a cover disposed proximate to a portion of the chainsaw bar to facilitate clamping the chainsaw bar to the chainsaw body. The cover may be configured to receive a tension sub assembly disposed at a portion of the cover to enable both adjustment of chain tension in a first mode of operation and clamping of the chainsaw bar in a second mode of operation. The tension sub assembly may include a mode shift mechanism configured to move between a first position in which the tension sub assembly operates in the first mode and a second position in which the tension sub assembly operates in the second mode.

According to the invention, as disclosed in claim 1, a tension sub assembly is provided. The tension sub assembly may enable adjusting chain tension and bar clamp tension holding a chainsaw bar of a chainsaw to a chainsaw body of the chainsaw. The tension sub assembly may include a knob sub assembly, a cam sub assembly operably coupled to the knob assembly, and a spiral wheel sub assembly operably coupled to the cam sub assembly. The spiral wheel sub assembly may include a mode shift mechanism configured to move between a first position in which the tension sub assembly operates in a first mode and a second position in which the tension sub assembly operates in a second mode. The mode shift mechanism may enable both adjustment of chain tension in the first mode of operation and clamping of the chainsaw bar in the second mode of operation.

Some example embodiments may provide an operator with a relatively easy way to adjust chain tension and tighten the bar using a single mechanism and without tools.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates a perspective view of a chainsaw according to an example embodiment not part of the invention;
FIG. 2 illustrates a perspective view of a chainsaw as the one of FIG. 1, with some parts of the tensioning and clamping assembly removed according to an example embodiment not part of the invention,
FIG. 3 illustrates an exploded perspective view of a clamping and tensioning arrangement according to an example embodiment not part of the invention;
FIG. 4 illustrates an exploded perspective view of the clamping and tensioning arrangement of FIG. 3, as seen from an opposite direction, according to an example embodiment not part of the invention;
FIG. 5 illustrates a perspective view of a tensioning and clamping knob according to an example embodiment not part of the invention;
FIG. 6 is a sectional view of a tensioning and clamping assembly of FIGS. 3-5 according to an example embodiment not part of the invention;
FIG. 7 illustrates a sectional view of the example of FIG. 6, with a portion of the knob cut away according to an example embodiment not part of the invention;
FIG. 8 illustrates a sectional top view of an adapter member according to an example embodiment not part of the invention;
FIG. 9 illustrates a perspective view of a tension sub assembly withdrawn from a cover of a chainsaw according to the invention;
FIG. 10 illustrates an exploded perspective view of some portions of the tension sub assembly according to the invention;
FIG. 11 illustrates a side view of a chainsaw body with cover removed according to the invention;
FIG. 12 illustrates a partial perspective view of a portion of the spiral wheel sub assembly and the adapter plate to illustrate how the spiral wheel sub assembly engages the chainsaw bar according to the invention;
FIG. 13 illustrates a partially exploded perspective view of a cam sub assembly according to the invention;
FIG. 14 illustrates a top view of a portion of the cam sub assembly and a spiral wheel sub assembly according to the invention;
FIG. 15 illustrates an exploded view of the spiral wheel sub assembly according to the invention.
FIG. 16 illustrates a top cutaway view of a slider assembly of the spiral wheel sub assembly according to the invention;
FIG. 17, which includes FIGS. 17A, 17B and 17C, illustrates one example mechanism by which the spring force of a spring may be overcome in order to shift modes according to the invention; and
FIG. 18, which includes FIGS. 18A, 18B and 18C, illustrates additional component positions relative to the mode shifts pictured in FIG. 17 according to the invention.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other.

Some example embodiments described herein provide a chain tensioning mechanism in combination with a bar clamping mechanism using a single knob, where the knob has two modes of operation. The mode shift between the first mode of operation in which chain tension is adjustable and the second mode of operation in which bar clamping tension is adjustable may be accomplished via movement of a mode shift mechanism. In some embodiments, movement of the mode shift mechanism between the first position and the second position occurs without the use of tools and without operator contact with the mode shift mechanism.

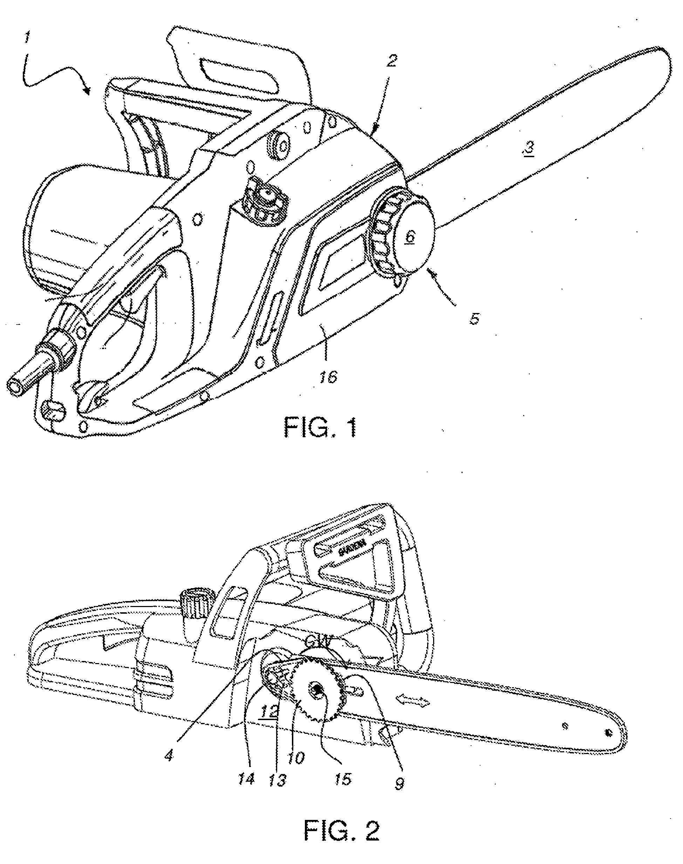

Referring to the drawings, FIG. 1 shows a chainsaw 1 having a body portion 2 housing a motor (not shown), which motor is preferably an electric motor or an internal combustion engine. A guide bar 3 is attached to the body portion 2 by a tensioning and clamping assembly 5 (only a tensioning/clamping knob 6 of which can be seen in FIG. 1) provided at one end of the guide bar 3. A saw chain 4 (see FIG. 2) is supported in a peripheral groove (not shown) which extends around the guide bar 3, and is in drivable engagement with a sprocket drive wheel 13 (see FIG. 2) fixed to a sprocket drive shaft 14 (see FIG. 2) drivably connected to the motor.

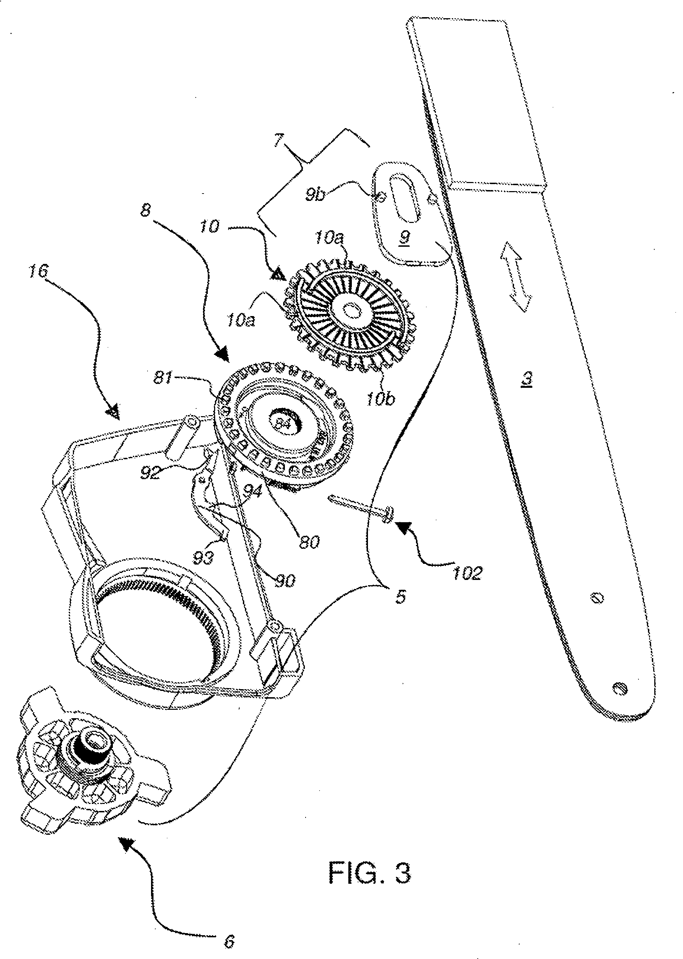

In use, the guide bar 3 may be clamped against an internal clamping surface 12 of the body portion 2 by the tensioning and clamping assembly 5, (as shown in FIG. 2), in which a cover plate 16 (shown in FIG. 3) has been removed to show the clamping surface 12, the sprocket drive wheel 13 and the sprocket drive shaft 14. The tensioning/clamping knob 6 of the assembly 5 as well as an adapter member 8 has also been removed in the view shown in FIG. 2.

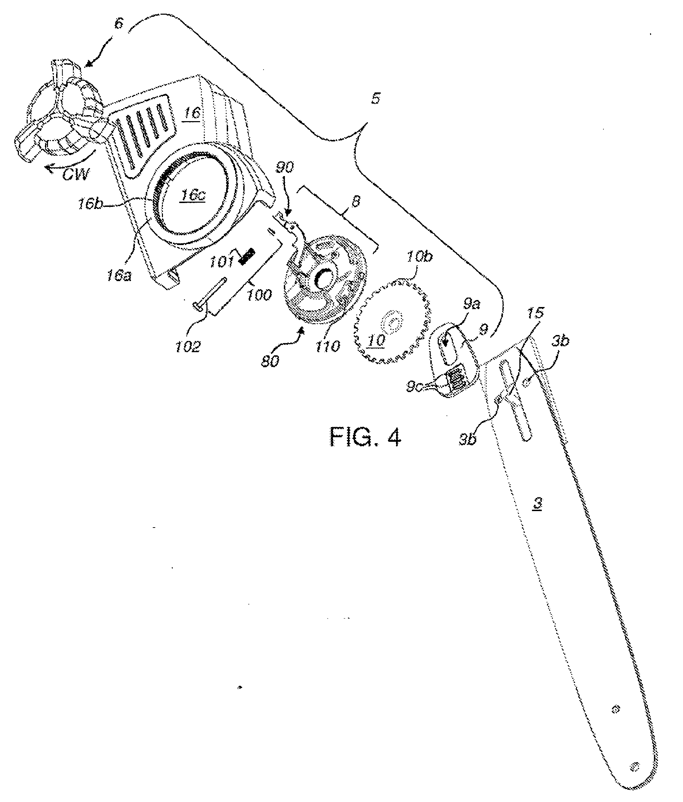

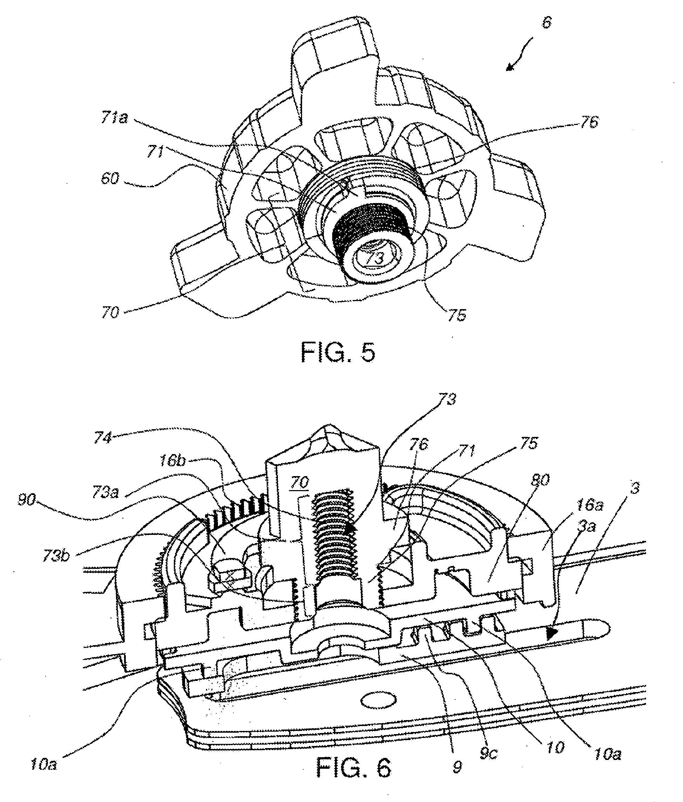

Referring now to FIGS. 3 and 4, a tensioning and clamping assembly 5 may include a tensioning/clamping knob 6, a cover plate 16, an adapter member 8, a movement converting member 7 embodied as a spiral wheel 10, and a tensioning plate 9. The entire assembly 5 is mounted on a stud 15 which is fixed to, and extends outwardly of, the body portion 2 of the chainsaw 1. The stud 15 passes through an elongate aperture in the guide bar 3, through an aperture 9a in the tensioning plate 9, further through the spiral wheel 10 and the adapter member 8 for screw-threaded engagement with an internal screw thread 74 (see FIG. 6) formed in the tensioning/clamping knob 6.

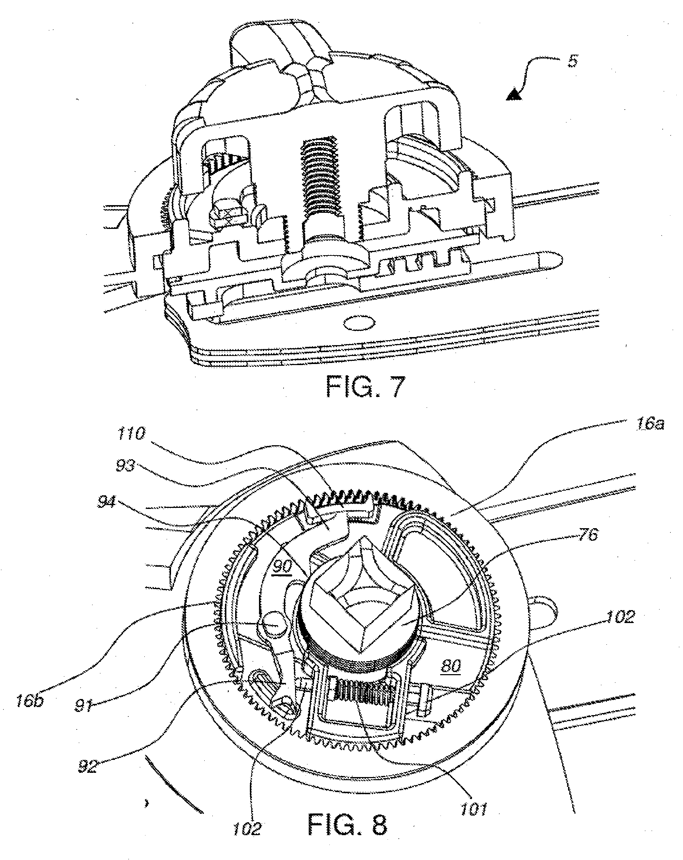

The tensioning/clamping knob 6 may have the configuration shown in FIGS. 3 to 7. It has a grip portion 60 and a neck 70. The grip portion 60 and the neck 70 are rigidly connected to each other. In FIG. 6, the grip portion 60 is broken away for illustration purposes, such that only the neck 70 of the knob 6 is visible. The neck 70 comprises a hole 73, arranged to receive the stud 15. An inner portion 73a of the hole 73 is provided with a screw thread 74, whereas an outer portion 73b of the hole, adjacent to the opening of the hole 73, is unthreaded. In a free end of the neck 70 there is an externally threaded portion 75, arranged for threaded engagement with an internal screw thread 82 provided on the edges of an aperture 83 of the adapter member 8.

Adjacent to the externally threaded portion of the neck 70, a cam portion 71 is formed. The cam portion 71 has an irregular circumference, as shown in FIG. 5, with a radially protruding portion 71a. Since the cam portion 71 according to the embodiment shown in FIGS. 3 to 8 is formed integrally with the rest of the tensioning/clamping knob 6, rotation of the grip portion 60 implies rotation of the cam portion 71. Adjacent to the cam portion 71, a threaded portion 76 having essentially the same radius as the protruding portion 71 a is formed. The cam portion 71 may be embodied as a separate part, which may be in engagement with a tensioning/clamping knob 6, such that rotation of the tensioning/clamping knob 6 involves rotation of the cam portion 71.

The tensioning/clamping knob 6 may be arranged to be operatively connected to an adapter member 8. The adapter member 8 comprises an adapter plate 80 which is selectively rotatable. The adapter plate 80 is arranged to rotate therewith a spiral wheel 10 of the movement converting unit 7. The adapter plate 80 has the configuration shown in FIGS. 3 and 4. On an inwardly facing surface, the adapter plate 80 is provided with protrusions 81. The adapter plate has a central aperture 84, which is internally threaded.

A lever 90 is pivotably connected to the adapter plate 80 on an outwardly facing side of the adapter plate 80. The lever 90 is pivotable about a pivot joint 91 defining a pivot axis which is essentially orthogonal to a main extension plain of the adapter plate 80. The lever has a first leg 92 and a second leg 93. Furthermore, the lever 90 is provided with an engagement portion 94. The adapter member 8 may also comprise a tension selection arrangement 100 connected to the outwardly facing side of the adapter plate 80. The tension selection arrangement 100 comprises a coil spring 101 and a screw 102. Furthermore, the adapter member 8 may include a pawl member 110 which is arranged on the outwardly facing side of the adapter plate 80, proximate to the periphery of the adapter plate 80. The pawl member 110 may be radially movable. In its resting position, the pawl member 110 may not protrude beyond the periphery of the adapter plate 80. Under influence of a force in a radial direction, the pawl member 110 may be enabled to move such that it partly protrudes beyond the periphery of the adapter plate 80.

In the movement converting unit 7, rotational movement of the adapter member 8 is converted into translational movement of the guide bar 3, relative to the body portion 2 of the chain saw 1. The movement converting unit 7 comprises a tensioning plate 9 and a spiral wheel 10.

The tensioning plate 9 as shown in FIGS. 3 and 4 is arranged to be attached to the guide bar 3. The tensioning plate 9 is provided with a guide bar attaching portion 9b arranged to cooperate with a tensioning plate attaching portion 3b of the guide bar 3. The guide bar attaching portion 9b can be embodied as a pair of protrusions 9b provided on the guide bar facing surface of the tensioning plate 9. The protrusions 9b are arranged to be received in a pair of complementary shaped apertures 3b provided in the guide bar 3. Alternatively, the tensioning plate 9 can be formed integrally with the guide bar 3. Both embodiments imply that a linear movement of the tensioning plate 9 relative to the body portion 2 results in a corresponding linear movement of the guide bar 3.

On an outwardly facing surface, the tensioning plate 9 is provided with ribs 9c defining guide paths for the spiral shaped protrusions 10a provided on an inwardly facing surface of the spiral wheel 10. The spiral shaped protrusions 10a of the spiral wheel 10 are arranged to be slidably received within the guide path such that, when the spiral wheel 10 is rotated clockwise, as indicated by the arrow in FIG. 2, the tensioning plate 9 will move in a forward direction relative to the chain saw body 2. The spiral wheel 10 is provided with teeth 10b around its circumference, which teeth 10b are arranged to cooperate with the protrusions 81 provided on an inwardly facing surface of the adapter plate 80 of the adapter member 8. Thus, by rotating the adapter plate 80 in the clock-wise direction, the spiral wheel 10 is forced to rotate in the same direction, implying that the tensioning plate 9 and the guide bar 3 will be pushed in a direction away from the body portion 2. In this way, tension is applied to chain 4.

The cover plate 16 is arranged to cover the sprocket wheel 13, the adapter member 8 and the movement converting unit 7. When assembled, the guide bar 3 is clamped between the cover plate 16 and the internal clamping surface 12 of the body portion 2. The cover plate 16 according to FIGS. 3 to 8 comprises a circular aperture 16c surrounded by a collar portion 16a. Internal teeth 16b are provided around the circumference of the circular aperture 16c.

When reassembling the tensioning and clamping assembly 5, e.g. due to replacement of the saw chain 4 or guide bar 3, the operator firstly arranges the guide bar 3 (provided with the saw chain 4) adjacent to the internal clamping surface 12 such that the stud 15 extends through the elongate opening, and such that the sprocket drive wheel 13 engages the chain 4. Then, he or she places the movement converting unit 7, the adapter member 8, the cover plate 16 and the tensioning/clamping knob 6 such that the stud 15 extends further through their apertures. He or she inserts the free end of the stud 15 into the hole 73 of the knob 6. The knob 6 is threadably connected to the adapter member 8 via the external threads provided on the free end of the neck 70, engaging the internal threads of the aperture of adapter plate 8.

When the end of the stud 15 has been inserted a distance, it will come into contact with the screw thread 74 provided around the circumference of the inner portion of the hole 73 of the knob 6. When the operator turns the knob 6 in the clockwise direction, the knob 6 comes into threaded engagement with the threaded stud 15. This threaded engagement implies that the tensioning and clamping assembly becomes pre-fixed, such that the guide bar 3 or the parts of the assembly are captively connected to the body portion 2 of the chain saw 1.

During pre-fixing, the lever 90 is in a first locked state, in which the first leg 92 of the lever 90 is engaged with the internal teeth 16b provided around the circumference of the circular aperture of the cover plate 16. The screw 102 of the tension selection arrangement 100 forces the first leg 92 to rotate towards the internal teeth 16b, and since the diameter of the knob 6 where the second leg 93 comes into contact with the knob 6 is small, the second leg 93 is not forced to move in the opposite direction. Thus, only the knob 6 will rotate during pre-fixing, whereas the adapter plate 80 is inhibited from rotating due to the ratchet defined by the first lever leg 92 and the internal teeth 16b of the circular aperture 16c of the cover plate 16.

In order to apply a correct tension to the chain 4, the operator continues turning the knob 6 clock-wise. Now, the diameter of the cam portion 71 where the engagement portion 94 of the lever 90 is in contact may increase. Because of this, the ratchet described above disengages and the spring 101 gets loaded. Now the adapter 8 can turn as the cam 71 turns.

The engagement portion 94 of the lever comes into engagement with the edge of the protruding portion 71a of the cam portion 71 of the knob 6, such that the lever 90, and thereby the adapter plate 80 rotates with the knob 6. Since the adapter plate 80 engages with the spiral wheel 10, the bar 3 will move forwardly and the chain 4 will get tensioned. The more the knob 6 is turned in the clock-wise direction the more rotational motion the cam portion 71 transmits to the lever 90 and the more tension is applied to the chain 4.

When a predetermined tension is applied to the chain 4, the tension selection member 100 will no longer be able to prevent the engagement portion 94 of the lever 90 to leave its adapter plate rotating enabling position adjacent to the edge of the protruding portion 71 a of the cam 71. Thus, when the operator keeps turning the knob 6, the engagement portion 94 moves over the edge defined by the protruding portion 71 a of the cam portion 71 and reaches the protruding portion 71 a of the cam portion 71. Now the second leg 93 of the lever 90 will press against a spring element 110 such that it engages with the teeth 16b of the cover plate 16. The lever 90 is now in a second locked position, in which it inhibits rotating of the adapter plate 80.

When the knob 6 is turned even more, the engagement portion 94 of the lever 90 will bear against a part 76 of the knob 6 which has a diameter which is essentially equal to the diameter of the protruding portion 71 a, such that the lever 90 is kept in its second locked state. Since the adapter 8 cannot turn any more, the chain tension is fixed. The spring 101 is preferably so configured that when optimal tension is applied to the chain 4 the spring 101 will not transmit enough torque to the lever 90 for the engagement portion 94 to stay in the recessed portion of the cam portion 71. With the screw 102 it is possible to load the lever 90 with different forces, so that it is possible to adjust the chain tension.

When the operator keeps turning the knob 6 clock-wise, the engagement portion 94 of the lever 90 will bear against a part of the neck 70 having a diameter which is so large that the second leg 93 is pressed towards the spring member 110, such that the lever 90 is still locked in its second locked position. Now, the bar 3 and the cover plate 16 get firmly fixed to the body portion 2.

In order to re-tension the chain 4 the operator first has to untighten the knob 6 by turning it 6 in an anti-clock-wise direction, such that the guide bar 3 becomes movable in relation to the cover portion 16 and the chainsaw body 2. The tensioning is then performed by turning the knob 6 clock-wise. The engagement portion 94 of the lever is then engaged by the knob 6 such that it rotates with the knob 6 and transmits rotational movement to the adapter 8. Thereby, the engagement portion 94 of the lever has come into engagement with the edge of the protruding portion 71a of the cam portion 71 of the knob 6, such that the lever 90, and thereby the adapter plate 80 rotates with the knob 6. Since the adapter plate 80 engages with the spiral wheel 10, the bar 3 will move forwardly and the chain 4 will get tensioned. The more the knob 6 is turned in the clock-wise direction the more rotational motion the cam portion 71 transmits to the lever 90 and the more tension is applied to the chain 4.

When a predetermined tension is applied to the chain 4, the tension selection member 100 will no longer be able to prevent the engagement portion 94 of the lever 90 to leave its adapter plate rotating enabling position adjacent to the edge of the protruding portion 71a of the cam 71. Thus, when the operator keeps turning the knob 6, the engagement portion 94 moves over the edge defined by the protruding portion 71a of the cam portion 71 and reaches the protruding portion 71 a of the cam portion 71. Now the second leg 93 of the lever 90 will press against a spring element 110 such that it engages with the teeth 16b of the cover plate 16. The lever 90 is now in a second locked position, in which it inhibits rotating of the adapter plate 80.

When the knob 6 is turned even more, the engagement portion 94 of the lever 90 will bear against a part 76 of the knob 6 which has a diameter which is essentially equal to the diameter of the protruding portion 71 a, such that the lever 90 is kept in its second locked state. Since the adapter 8 cannot turn any more, the chain tension is fixed. The spring 101 is preferably so configured that when optimal tension is applied to the chain 4 the spring 101 will not transmit enough torque to the lever 90 for the engagement portion 94 to stay in the recessed portion of the cam portion 71. With the screw 102 it is possible to load the lever 90 with different forces, so that it is possible to adjust the chain tension.

As previously disclosed, a structure of the rotating adapter 8 engages a structure of the spiral wheel 10, such that the spiral wheel 10 is displaced relative to the adapter 8 in the longitudinal direction of the guide bar 3. As the spiral wheel 10 is rigidly coupled to the guide bar 3, the guide bar 3 will follow the movement of the spiral wheel 10. Thus, by rotating the adapter 8 in the clock-wise direction, the spiral wheel 10 and the guide bar 3 will be pushed in a direction away from the chainsaw body 2. This, in order to apply tension to the chain 4.

In an example embodiment, a chain tensioning mechanism may be provided that enables a single mechanism or device (e.g., a knob of a cover assembly) to be used to tension a chainsaw chain, and also to clamp the chainsaw bar. Thus, for example, the same motion (e.g., rotation of the knob) may be used over a multimodal operation that accomplishes both chain tensioning to a predetermined level and a predetermined amount of bar clamping. Some example embodiments may provide for a mode shift mechanism that is in a first position responsive to operation of the knob in the chain tensioning mode until the chain tension reaches the predetermined level, at which time the mode shift mechanism may shift to a second position. Responsive to the shifting of the mode shift mechanism to the second position, the operation of the knob may cause bar clamping to the predetermined amount. After chain tightening to the predetermined level is achieved, no further tightening of the chain may be accomplished by operation of the knob. Instead, further operation of the knob may cause actions associated with a different mode of operation, namely bar clamping. In this regard, pressure may be exerted on the bar in order to clamp the bar tightly to the chainsaw body until the predetermined amount of pressure is achieved. After the bar is clamped to the predetermined amount of pressure, further operation of the knob may not increase the bar clamping pressure. However, some embodiments may employ a locking mechanism that may be engaged after bar clamping, to maintain bar tension during operation.

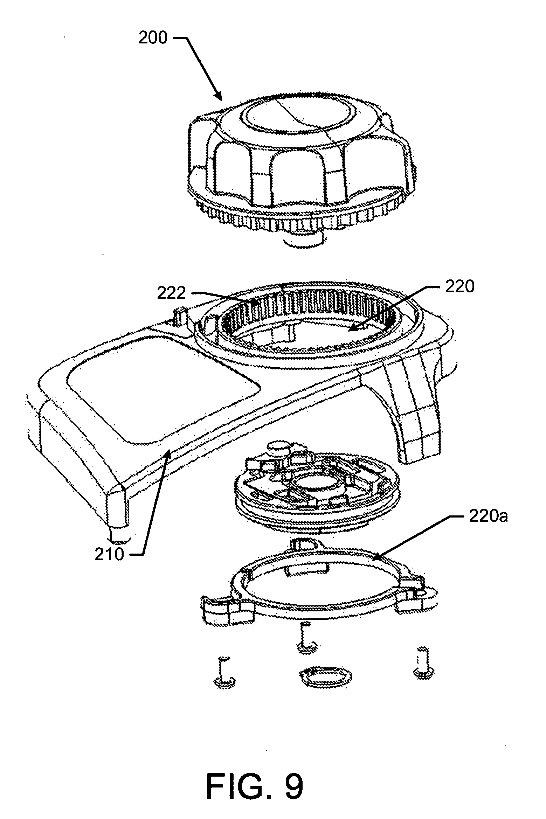

FIG. 9 illustrates a perspective view of a tension sub assembly 200 withdrawn from a cover 210 of a chainsaw according to the invention. The tension sub assembly 200 may snap or otherwise captured within a tension sub assembly receiver 220 disposed within the cover 210. The tension sub assembly receiver 220 may include gear teeth 222 disposed around an internal periphery thereof and the tension sub assembly 200 may be captured into the tension sub assembly receiver 220 via a split ring retainer 220a disposed in the cover 210. In some cases, the tension sub assembly 200 may be affixed to the tension sub assembly receiver 220 via screws or other fixing means.

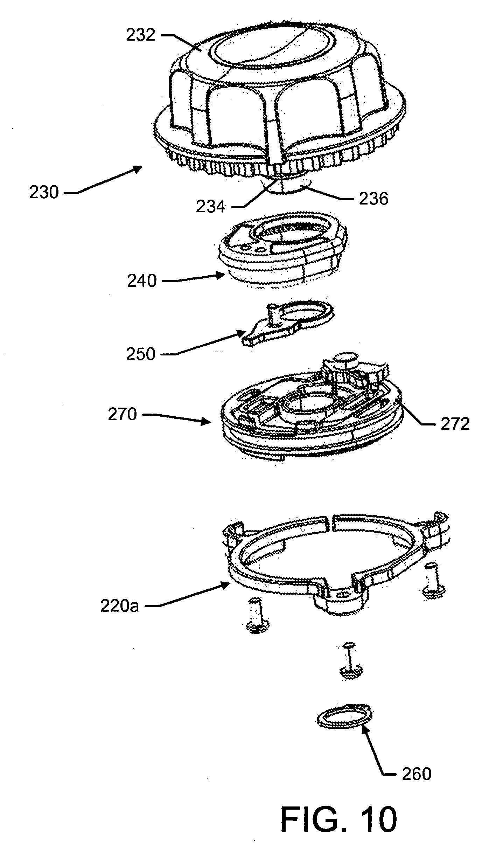

FIG. 10 illustrates an exploded perspective view of some portions of the tension sub assembly 200 according to the invention. In this regard, FIG. 10 illustrates a knob sub assembly 230, a cam sub assembly 240, a ratchet selector 250, a retaining ring 260 and a spiral wheel sub assembly 270, which includes a spiral wheel 272. When assembled to form the tension sub assembly 200, the spiral wheel sub assembly 270 may be disposed at an exposed end of the tension sub assembly 200 to facilitate engagement with the cover 210 (and the tension sub assembly receiver 220).

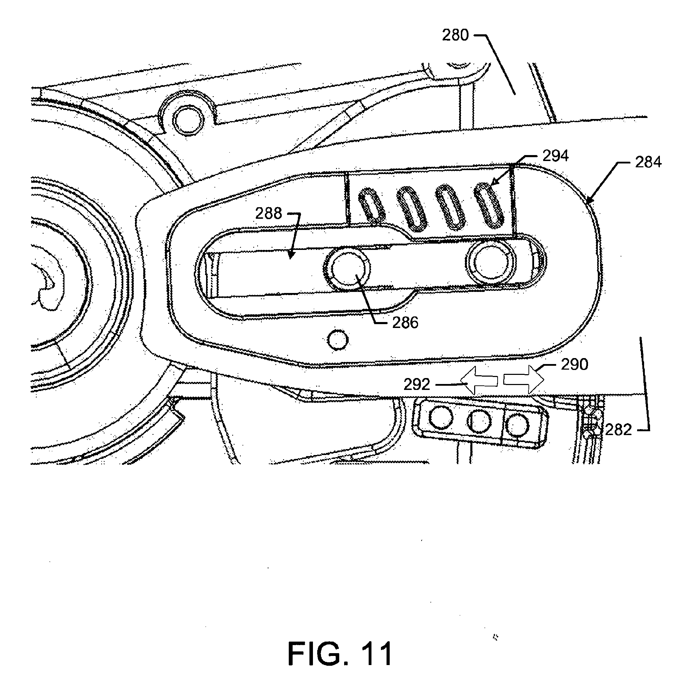

FIG. 11 illustrates a side view of a chainsaw body 280 with cover 210 removed. As can be seen in FIG. 11, a chainsaw bar 282 may be disposed proximate to the chainsaw body 280 such that an adapter plate 284 of the chainsaw bar 282 receives a fixing post 286 of the chainsaw body 280. The fixing post 286 may be a threaded bolt that extends out from the chainsaw body 280 in a direction substantially perpendicular to a plane in which the chainsaw bar 282 lies when disposed proximate to the chainsaw body 280. The adapter plate 284 may include a receiving slot 288 that linearly extends substantially parallel to a longitudinal centerline of the chainsaw bar 282. The receiving slot 288 may have a width that is slightly larger than a diameter of the fixing post 286, and may have a length that is sufficient to enable axial movement (as shown by arrows 290 and 292) of the chainsaw bar 282 to allow for chain tension adjustments. In this regard, for example, a chain (not shown) may ride around the periphery of the chainsaw bar 282, and thus the tension of the chain may be increased as the chainsaw bar 282 moves in a first axial direction (shown by arrow 290) and tension of the chain is decreased as the chainsaw bar 282 is moved in a second axial direction (shown by arrow 292).

The cover 210, with the tension sub assembly 200 installed therein, may be placed over the chainsaw body 280 proximate to the chainsaw bar 282 such that the knob sub assembly 230 engages the fixing post 286. The spiral wheel sub assembly 270 may then engage the adapter plate 284 to facilitate chain tension adjustment as described herein. Meanwhile, after chain tension adjustment is complete, the tension sub assembly 200 may shift from chain tensioning mode to bar clamping mode and the knob sub assembly 230 may tighten down on the fixing post 286.

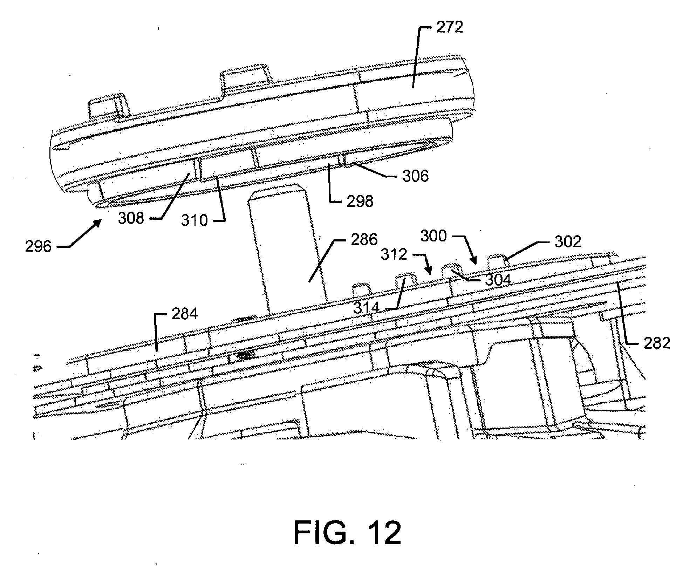

FIG. 12 illustrates a partial perspective view of a portion of the spiral wheel sub assembly 270 (namely the spiral wheel 272) and the adapter plate 284 to illustrate how the spiral wheel sub assembly 270 engages the chainsaw bar 282. As can be seen from FIG. 11, the adapter plate 284 may be affixed to one of the faces of the chainsaw bar 282. However, alternatively, the adapter plate 284 may fit (wholly or partially) within a receiving opening in the chainsaw bar 282 to affix the adapter plate 284 to the chainsaw bar 282. In this regard, for example, the adapter plate 284 may lie in a plane that is substantially parallel with a plane in which the chainsaw bar 282 lies and movement of the adapter plate 284 in either axial direction may cause corresponding movement of the chainsaw bar 282.

As shown in FIGS. 11 and 12, the adapter plate 284 may include a plurality of detents or protrusions 294. The protrusions 294 may be spaced apart from each other along a longitudinal axis of the adapter plate 284 and the chainsaw bar 282 extending forward of the receiving slot 288. The spiral wheel 272 may include a thread assembly 296 disposed on a surface thereof that faces the chainsaw bar 282 when the cover 210 engages the chainsaw body 280. The thread assembly 296 may include two or more threads. Each of the threads may extend substantially perpendicularly away from a face of the spiral wheel 272 to define a spiral thread that has a distance from an axial center of the spiral wheel 272 that decreases over a length of the threads from a leading edge to a trailing edge thereof. Each of the threads may extend over an arc that defines less than 360 degrees. For example, in some cases, two threads may be provided such that each thread defines an arc extending over approximately 180 degrees such that a leading edge of one thread is proximate to a trailing edge of the other thread and spaced apart from each other by about the same distance defined between the protrusions 294. A leading edge of each thread may be closer to an axis of rotation of the spiral wheel 272 than its respective trailing edge.

Thus, when a leading edge 298 of a first thread is disposed in a first slot 300 defined between a first protrusion 302 and a second protrusion 304, the trailing edge 306 of a second thread engages an opposing side of the first protrusion 302. Then, as the spiral wheel 272 is turned (e.g., clockwise) such that the first protrusion 302 rides along an exterior portion of the first thread, the first protrusion 302 is pushed away from the fixing post 286 until a trailing edge 308 of the first thread contacts the first protrusion 302, at which point a leading edge 310 of the second thread fits in a second slot 312 defined between the second protrusion 304 and a third protrusion 314. The second protrusion 304 may then ride along the exterior of the second thread, responsive to further turning of the spiral wheel 272 (clockwise) to continue to push the first and second protrusions 302 and 304 away from the fixing post 286. Continued turning of the spiral wheel 272 in a clockwise direction would cause the protrusions 294 to be further pushed away from the fixing post 286 thereby tightening the chain by moving the chainsaw bar 282 in the first axial direction 290. Alternatively, movement of the spiral wheel 272 in the opposite direction (e.g., counterclockwise) may cause the protrusions 294 to be drawn in toward the fixing post 286 to reduce chain tension.

As indicated above, the tension sub assembly 200 of an example embodiment may operate in two modes. In the first mode, movement of the knob sub assembly 230 may be coupled to the spiral wheel 272 so that the spiral wheel 272 rotates responsive to (and in some cases also proportional to) rotation of the knob sub assembly 230. In the second mode, movement of the knob sub assembly 230 may not be translated to the spiral wheel 272. Instead, movement of the knob sub assembly 230 may be converted to a tightening of the cover 210 to the chainsaw body 280 (e.g., responsive to tightening of the knob sub assembly 230 onto the fixing post 286). A shift from the first mode to the second mode may occur responsive to movement of a mode shift mechanism.

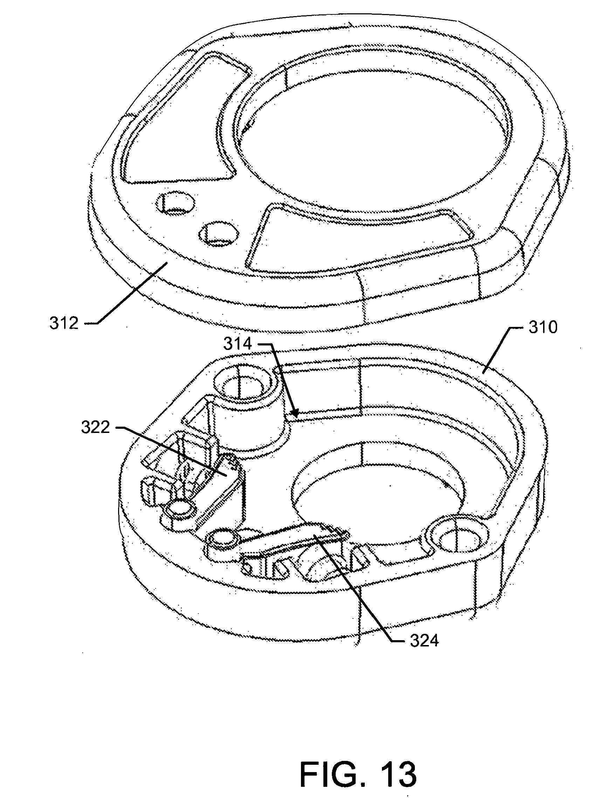

FIGS. 13-18 illustrate portions of the tension sub assembly 200 in relation to explaining the shift of modes between the first mode and the second mode. Referring now primarily to FIGS. 9-18, operation of the tension sub assembly 200 relative to shifting modes will be described. As shown in FIG. 10, the knob sub assembly 230 may include a cap 232 and a hub 234. The hub 234 may be affixed to the cap 232 in a manner that enables the hub 234 to rotate relative to the cap 232 when a torque or pressure above a certain level is reached. Thus, for example, when operating in the second mode (e.g., the bar clamping mode), the hub 234 and the cap 232 may remain in a fixed arrangement relative to one another to permit the hub 234 to be tightened onto the fixing post 286. However, when the certain level of torque or pressure is reached (e.g., a breakaway torque), the hub 234 may be allowed to rotate relative to the cap 232 so that no further torque or pressure may be exerted to clamp the chainsaw bar 282 to the chainsaw body 280 between the cover 210 and the chainsaw body 280. The hub 234 may include a recess to receive the fixing post 286, and may be internally threaded to engage threads on the fixing post 286.

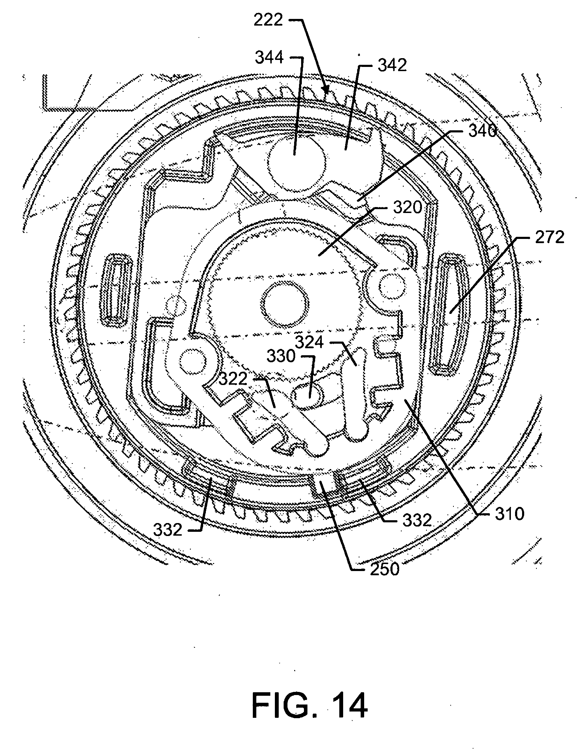

The cam sub assembly 240 may slide over the hub 234 followed by the ratchet selector 250. The spiral wheel sub assembly 270 may follow the ratchet selector 250 and the retaining ring 260 may be disposed in a groove 236 on the hub 234 to hold the cam sub assembly 240, the ratchet selector 250 and the spiral wheel sub assembly 270 in place relative to the hub 234 (see FIG. 10). The cam sub assembly 240, a partially exploded view of which is shown in FIG. 13, may include a cam body 310 and a cam cover 312. The cam cover 312 may face the cap 232 when assembled, and the cam body 310 may be disposed proximate to the ratchet selector 250 and the spiral wheel sub assembly 270. The cam body 310 may include sidewalls and a base, such that the sidewalls, the base and the cam cover 312 form a receiving space 314 inside which a ratchet 320 may be housed (see FIG. 14). The cam body 310 may also house a first ratchet pawl 322 and a second ratchet pawl 324 that may each be spring loaded to be capable of engaging the ratchet 320 that is shown in FIG. 14. The ratchet selector 250 may have a detent 330 that extends into the receiving space 314 to act as a direction selector by moving one of the ratchet pawls away from proximity to (and engagement with) the ratchet 320 based on which way the cap 232 is being turned. In this regard, as shown in FIG. 14, a portion of the ratchet selector 250 may be engaged by either of two protrusions 332 disposed at a surface of the spiral wheel 272 that is opposite of the surface of the spiral wheel 272 on which the thread assembly 296 is disposed. Depending on which direction the cap 232 is turned, the ratchet selector 250 may turn to engage one of the two protrusions 332 and push an opposing one of the ratchet pawls away from engagement with the ratchet 320.

As shown in FIG. 14, an external face of the base of the cam body 310 may lie proximate and generally parallel to a face of a slider assembly 340 forming a portion of the spiral wheel sub assembly 270. The slider assembly 340 may be slidable between a first position, in which the tension sub assembly 200 may be in the first mode (e.g., chain tensioning mode), and a second position, in which the tension sub assembly 200 may be in a second mode (e.g., a bar clamping mode). As such, the slider assembly 340 may act as a mode shift mechanism that shifts position to change operation of the tension sub assembly 200 from the first mode to the second mode. In an example embodiment, the slider assembly 340 may include a locking tooth 342 that may be affixed to a portion of the slider assembly 340 via a bolt 344 or other method of adhesion.

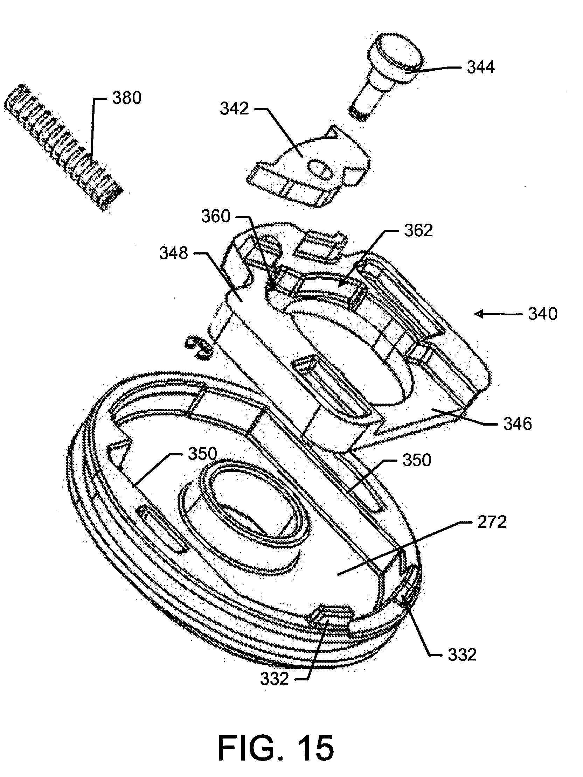

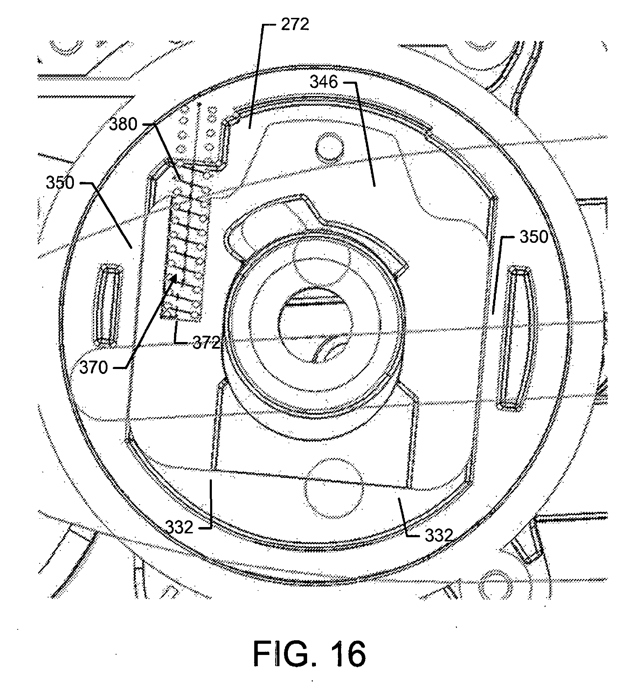

FIG. 15 illustrates an exploded view of the spiral wheel sub assembly 270 and FIG. 16 illustrates a top cutaway view of the slider assembly. As shown in FIGS. 15 and 16, the slider assembly 340 may be substantially rectangular in shape, with a protruding portion that supports the locking tooth 342. The spiral wheel 272 may include guide walls 350 disposed on opposing sides of the slider assembly 340 to slidably engage sides of the slider assembly 340 as the slider assembly 340 moves between the first position and the second position. The two protrusions 332 may be disposed proximate to a bottom edge of the slider assembly 340, and the bottom edge of the slider assembly may be on an opposite side to the side on which the protruding portion at which the locking tooth 342 is disposed.

The assembly 340 (as shown in FIG. 15) may include a base plate 346 and a top plate 348. The base plate 346 and top plate 348 may each have a receiving opening disposed substantially at a center portion thereof and the receiving openings of each of the base plate 346 and the top plate 348 may be in substantial registration with each other. The top plate 348 may include a cutout portion disposed proximate to the two protrusions 332 to permit the ratchet selector 250 to rotate therein between the two protrusions 332. The top plate 348 may also include a first cam protrusion receiver slot 360 and a second cam protrusion receiver slot 362, each of which may be open to the receiving opening at a side of the receiving opening that is opposite with respect to the cutout portion. Meanwhile, the base plate 346 may include a slide limiter 370 formed as a cutout portion of the base plate 346. A slider catch 372 may be formed to protrude substantially perpendicularly from the surface of the spiral wheel 272 that is opposite of the surface of the spiral wheel 272 on which the thread assembly 296 is disposed. The slider catch 372 may protrude into the slide limiter 370 and the slider assembly 340 may be enabled to move from the first position at which the slider assembly 340 is disposed as close to the two protrusions 332 as possible, to the second position at which the slider assembly is disposed as far away from the two protrusions 332 as possible (i.e., the position shown in FIG. 16).

As described above, responsive to the slider assembly 340 being in the first position, the spiral wheel 272 may move when the cap 232 is rotated and the thread assembly 296 may engage the protrusions 294 to adjust the axial position of the chainsaw bar 282 to adjust chain tension. However, when the slider assembly 340 moves into the second position, the spiral wheel 272 may be locked in position relative to the cover 210 so that the spiral wheel 272 does not rotate responsive to rotation of the cap 232. Instead, in the second position, the rotation of the cap 232 causes the hub 234 to be threaded onto the fixing post 286 to tighten the cover 210 to the chainsaw body 280 and thereby tighten the clamping force on the chainsaw bar 282.

When the slider assembly 340 moves into the second position, the locking tooth 342 may be inserted into the gear teeth 222 disposed around an internal periphery of the tension sub assembly receiver 220. When the gear teeth 222 receive the locking tooth 342, the locking tooth 342 may prevent any further rotation of the spiral wheel 272, thereby locking the position of the spiral wheel 272 relative to the cover 210 and preventing any further adjustment of chain tension until the locking tooth 342 is extracted from the gear teeth 222.

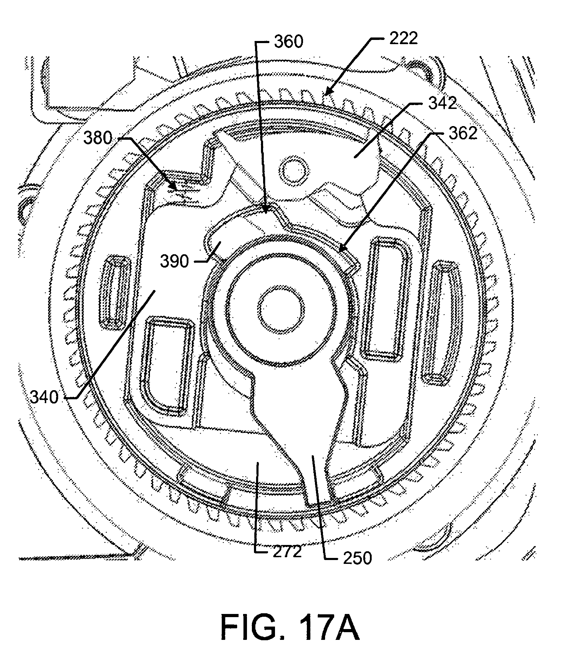

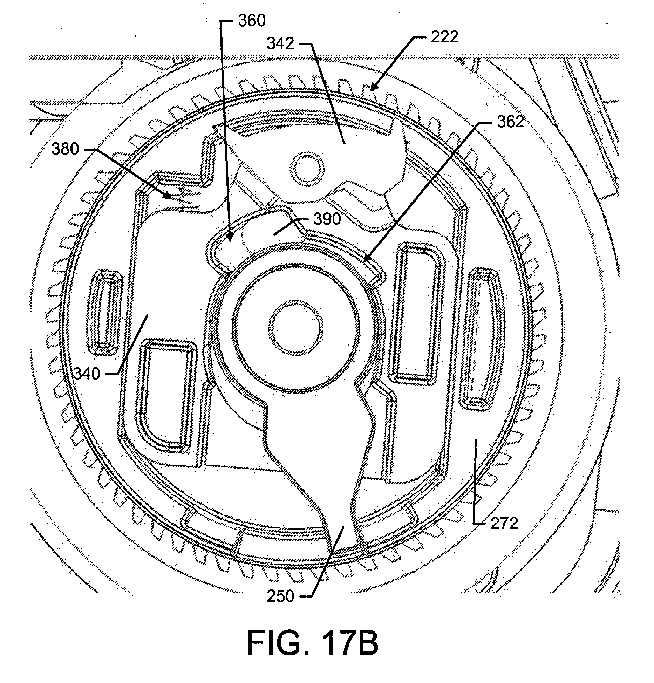

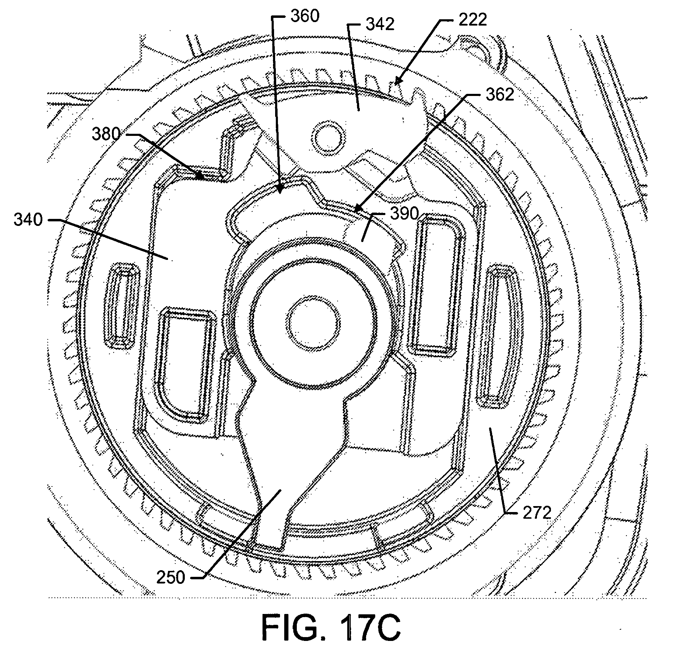

The slider assembly 340 may include a spring 380 that may be used to bias the slider assembly 340 toward the first position. Accordingly, the spring force applied by the spring 380 must be overcome in order to move the slider assembly 340 into the second position to shift modes of operation of the tension sub assembly 200. FIG. 17, which includes FIGS. 17A, 17B and 17C, illustrates one example mechanism by which the spring force of the spring 380 may be overcome in order to shift modes according to an example embodiment. In the example of FIG. 17, a cam protrusion 390 may extend substantially perpendicularly from a face of the base of the cam body 310 in order to extend into the first cam protrusion receiver slot 360 or the second cam protrusion receiver slot 362 as shown in FIG. 17.

The cam protrusion 390 may be disposed within the first cam protrusion receiver slot 360 when the slider assembly 340 is in the first position and may be disposed within the second cam protrusion receiver slot 362 when the slider assembly 340 is in the second position. FIG. 17A shows the slider assembly 340 is in the first position responsive to the cam protrusion 390 being disposed within the first cam protrusion receiver slot 360 with no rotation of the cap 232.

FIG. 17B shows movement of the cam protrusion 390 toward the second cam protrusion receiver slot 362 responsive to rotation of the cap 232 prior to the spring force of the spring 380 being overcome. The slider assembly 340 of FIG. 17B is still in the first position and chain tightening may be accomplished since the locking tooth is not engaged with the gear teeth 222 so that the spiral wheel 272 turns relative to the cover 210 and the gear teeth 222. One of the ratchet pawls may also be engaging the ratchet 320 during this period and the cam assembly 240 may rock or rotate slightly as the cap 232 is turned. In response to the chain tension reaching a predetermined threshold, the spring force of the spring 380 may be overcome and the cam protrusion 390 may move into the second cap protrusion receiver slot 362 to initiate movement of the slider assembly 340 from the first position to the second position thereby shifting the operational mode from chain tensioning mode to bar clamping mode responsive to movement of the mode shift mechanism (e.g., the slider assembly 340).

FIG. 17C shows the slider assembly 340 in the second position. Movement of the slider assembly 340 into the second position may engage the locking tooth 342 to the gear teeth 222 to lock the spiral wheel 272 relative to the gear teeth 222 and relative to the cover 210. Further rotation of the cap 232 may therefore tighten the hub 234 onto the fixing post 286. As indicated above, when the knob sub assembly 230 is tightened onto the fixing post 286 to a predetermined pressure (e.g., about 40 to about 70 in/lb), the cap 232 may reach a breakaway torque and further rotation of the cap 232 may not provide further clamping pressure on the chainsaw bar 282.

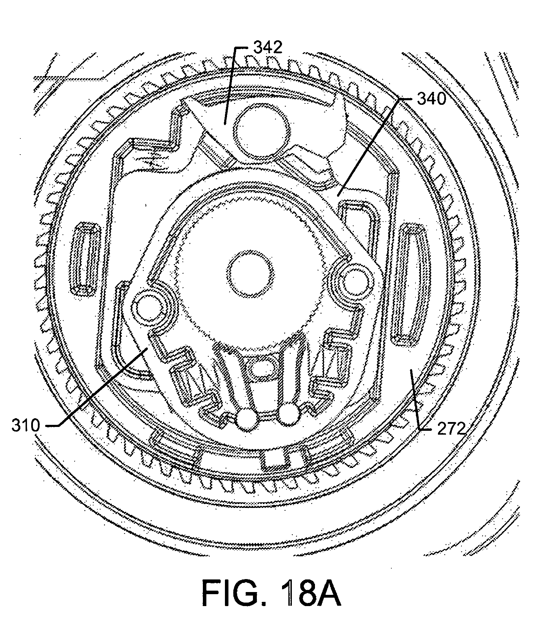

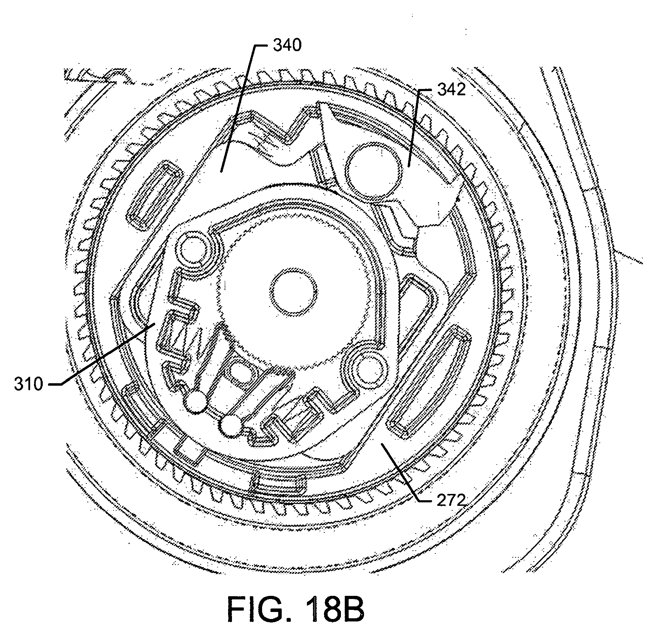

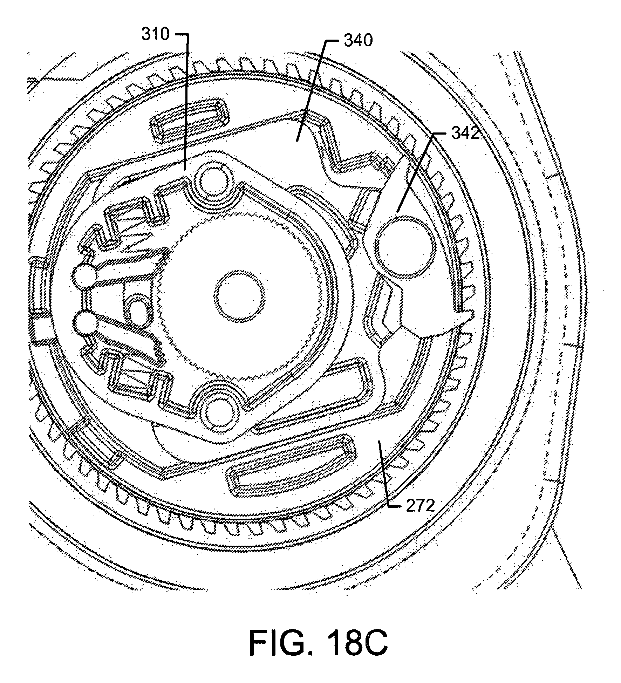

FIG. 18, which includes FIGS. 18A, 18B and 18C, shows the slider assembly 340 in the same corresponding positions described above in relation to the descriptions of FIG. 17, except that FIG. 18 further shows the cam body 310 and components disposed therein before the knob sub assembly 230 is rotated (FIG. 18A), while the knob sub assembly 230 is being rotated (FIG. 18B), and after the slider assembly 240 has moved to the second position (FIG. 18C).

Accordingly, some example embodiment may provide a chain tensioning mechanism in combination with a bar clamping mechanism using a single knob. For example, a tension sub assembly may be provided that is disposed at a portion of a clutch cover to enable both adjustment of chain tension in a first mode of operation and clamping of the chainsaw bar in a second mode of operation. The tension sub assembly may include a mode shift mechanism configured to move between a first position in which the tension sub assembly operates in the first mode and a second position in which the tension sub assembly operates in the second mode. In some embodiments, the mode shift mechanism may include a slider assembly configured to operably couple movement of the knob to a spiral wheel that is operably coupled to a slider assembly responsive to the slider assembly being in the first position, and configured to operably decouple the knob from the spiral wheel responsive to the slider assembly being in the second position. In an example embodiment, the knob may rotate to adjust an axial position of the chainsaw bar to adjust chain tension in the first mode, and may rotate to draw the knob closer to the chainsaw body to adjust bar clamp tension in the second mode. In some embodiments, movement of the mode shift mechanism between the first position and the second position occurs without the use of tools and without operator contact with the mode shift mechanism. In other words, the mode shift mechanism may move, or shift positions, at a pre-programmed pressure or torque setting (relative to chain tension). Adjustment of bar clamping tension may also stop at a pre-programmed pressure or torque setting. For example, the knob may include a cap and a hub operably coupled to each other such that the hub turns responsive to movement of the cap until a breakaway torque is reached relative to clamping of the chainsaw bar. The hub may no longer turn responsive to movement of the cap after the breakaway torque is reached.

## Claims

1. A tension sub assembly (200) for adjusting chain tension and bar clamp tension holding a chainsaw bar (282) of a chainsaw to a chainsaw body of the chainsaw, the tension sub assembly (200) comprising:
a knob sub assembly (230);
a cam sub assembly (240) operably coupled to the knob assembly (230) and
a spiral wheel sub assembly (270) operably coupled to the cam sub assembly (240),
wherein the spiral wheel sub assembly (270) comprises a mode shift mechanism configured to move between a first position in which the tension sub assembly operates in a first mode and a second position in which the tension sub assembly operates in a second mode, the mode shift mechanism enabling both adjustment of chain tension in the first mode of operation and clamping of the chainsaw bar (282) in the second mode of operation, **characterized in that** there is further provided
wherein the adjustment of chain tension and the clamping of the chainsaw bar (282) are both achieved by rotating the knob sub assembly (230).

2. The tension sub assembly of claim 1, wherein the cam sub assembly (240) includes a cam protrusion (390) that shifts position from being disposed in a first cam protrusion receiver slot (360) of the spiral wheel sub assembly (270), corresponding to the first position, to being disposed in a second cam protrusion receiver slot (362) of the spiral wheel sub assembly (270), corresponding to the second position, responsive to movement of the knob sub assembly (230) overcoming a biasing force holding the mode shift mechanism in the first position.

3. The tension sub assembly of claim 2, wherein the knob sub assembly (230) rotates to adjust an axial position of the chainsaw bar to adjust chain tension in the first mode, and rotates to draw the knob sub assembly (230) closer to the chainsaw body to adjust bar clamp tension in the second mode.

4. The tension sub assembly of claim 2 or 3, wherein the cam protrusion (390) is configured to shift from the first cam protrusion receiver slot (360) to the second cam protrusion receiver slot (362) responsive to chain tension reaching a predetermined amount.

5. The tension sub assembly of any of claims 1 to 4, wherein the knob sub assembly (230) comprises a cap (232) and a hub (234) operably coupled to each other, wherein the hub (234) turns responsive to movement of the cap (232) until a breakaway torque is reached relative to clamping of the chainsaw bar, the hub no longer turning responsive to movement of the cap after the breakaway torque is reached.

6. The tension sub assembly of claim 5, wherein the hub (234) receives a portion of the cam sub assembly (240) and a portion of the spiral wheel sub assembly (270), and wherein the spiral wheel sub assembly (270) turns with the hub (234) in the first mode, and is fixed such that the hub (234) turns independent of the spiral wheel sub assembly (270) in the second mode.

7. The tension sub assembly of any of claims 1 to 6, wherein the tension sub assembly comprises a ratchet (320) operable at least during the second mode.

8. The tension sub assembly of claim 7, wherein the tension sub assembly further comprises a first ratchet pawl (322), a second ratchet pawl (324) and a ratchet selector (250) that rotates responsive to rotation of the tension sub assembly (200) in order to selectively engage one of the first ratchet pawl (322) or the second ratchet pawl (324).

9. The tension sub assembly of any of claims 1 to 8, wherein movement of the mode shift mechanism between the first position and the second position occurs without tools and without operator contact with the mode shift mechanism.

10. The tension sub assembly of any of claims 1 to 9, wherein the tension sub assembly (200) is configured to be disposed within a tension sub assembly receiver (220) of a clutch cover of the chainsaw, the tension sub assembly receiver (220) comprising a plurality of gear teeth (222) disposed around an interior periphery of the tension sub assembly receiver (220), the gear teeth (222) being engaged by the tension sub assembly (200) responsive to movement of the mode shift mechanism to the second position to lock a first portion of the tension sub assembly in position relative to the gear teeth while a second portion of the tension sub assembly remains moveable to facilitate clamping the chainsaw bar to the chainsaw body.

11. The tension sub assembly of any of claims 1 to 10, wherein the spiral wheel sub assembly (270) comprises a spiral wheel (272) that provides threaded engagement to a portion of the chainsaw bar to enable adjustment of chain tension responsive to movement of the spiral wheel (272) while the mode shift mechanism is in the first position.

12. The tension sub assembly of claim 11, wherein the mode shift mechanism comprises a slider assembly (340) configured to operably couple movement of the knob sub assembly (230) to the spiral wheel (272) responsive to the slider assembly (340) being in the first position, and to operably decouple the knob sub assembly (230) from the spiral wheel (272) responsive to the slider assembly (340) being in the second position.

13. The tension sub assembly of claim 11 or 12, wherein the chainsaw bar comprises a plurality of protrusions that are sequentially engaged by a thread assembly (296) of the spiral wheel responsive to rotation of the knob sub assembly (230) in the first mode.

14. The tension sub assembly of any of claims 1 to 13, wherein the tension sub assembly (200) comprises a biasing spring (380) to bias the mode shift mechanism toward the first position, and wherein the biasing spring is overcome responsive to the chain tension reaching a predetermined amount.

15. A chainsaw comprising:
a chainsaw body;
a chainsaw bar configured to be operably coupled to a cutting chain; and
a clutch cover disposed proximate to a portion of the chainsaw bar to facilitate clamping the chainsaw bar to the chainsaw body,
**characterized in that** it furthermore comprises
a tension sub assembly (200) according to any of claims 1 to 14, which tension sub assembly is received in the clutch cover.

## Patentansprüche

1. Spannungsbaugruppe (200) zur Einstellung der Kettenspannung und der Blattklemmspannung, die ein Kettensägeblatt (282) einer Kettensäge an einem Kettensägekörper der Kettensäge hält, wobei die Spannungsbaugruppe (200) umfasst:
eine Knopfbaugruppe (230); und
eine Spiralradbaugruppe (270), die operativ mit der Nockenbaugruppe (240) gekoppelt ist,
wobei die Spiralradbaugruppe (270) einen Modusumschaltmechanismus umfasst, der dazu ausgebildet ist, sich zwischen einer ersten Stellung, in der die Spannungsbaugruppe in einem ersten Modus arbeitet, und einer zweiten Stellung, in der die Spannungsbaugruppe in einem zweiten Modus arbeitet, zu bewegen, wobei der Modusumschaltmechanismus sowohl die Einstellung der Kettenspannung in dem ersten Betriebsmodus als auch das Klemmen des Kettensägeblatts (282) in dem zweiten Betriebsmodus ermöglicht,
**dadurch gekennzeichnet, dass** des Weiteren
eine Nockenbaugruppe (240), die operativ mit der Knopfanordnung (230) verbunden ist; vorgesehen ist,
wobei die Einstellung der Kettenspannung und das Klemmen des Kettensägeblatts (282) beide durch Drehen der Knopfbaugruppe (230) erreicht werden.

2. Spannungsbaugruppe nach Anspruch 1, wobei die Nockenbaugruppe (240) einen Nockenfortsatz (390) umfasst, der in Ansprechen auf die Bewegung der Knopfbaugruppe (230) unter Überwindung einer Vorspannkraft, die den Modusumschaltmechanismus in der ersten Stellung hält, die Stellung, die in einem ersten Nockenfortsatzaufnahmeschlitz (360) der Spiralradbaugruppe (270) angeordnet ist, was der ersten Stellung entspricht, in eine Stellung, die in einem zweiten Nockenfortsatzaufnahmeschlitz (362) der Spiralradbaugruppe (270) angeordnet ist, was der zweiten Stellung entspricht, verschiebt.

3. Spannungsbaugruppe nach Anspruch 2, wobei die Knopfbaugruppe (230) sich dreht, um eine axiale Stellung des Kettensägeblatts einzustellen, um die Kettenspannung in dem ersten Modus einzustellen, und sich dreht, um die Knopfbaugruppe (230) näher an den Kettensägekörper zu ziehen, um die Blattklemmspannung in dem zweiten Modus einzustellen.

4. Spannungsbaugruppe nach Anspruch 2 oder 3, wobei der Nockenfortsatz (390) dazu ausgebildet ist, sich in Ansprechen darauf, dass die Kettenspannung ein vorbestimmtes Maß erreicht, von dem ersten Nockenfortsatzaufnahmeschlitz (360) in den zweiten Nockenfortsatzaufnahmeschlitz (362) zu verschieben.

5. Spannungsbaugruppe nach einem der Ansprüche 1 bis 4, wobei die Knopfbaugruppe (230) eine Kappe (232) und eine Nabe (234) umfasst, die operativ miteinander gekoppelt sind, wobei die Nabe (234) sich in Ansprechen auf die Bewegung der Kappe (232) dreht, bis ein Losbrechdrehmoment relativ zur Klemmung des Kettensägeblatts erreicht ist, wobei sich die Nabe nicht länger in Ansprechen auf die Bewegung der Kappe dreht, nachdem das Losbrechdrehmoment erreicht ist.

6. Spannungsbaugruppe nach Anspruch 5, wobei die Nabe (234) einen Abschnitt der Nockenbaugruppe (240) und einen Abschnitt der Spiralradbaugruppe (270) aufnimmt, und wobei die Spiralradbaugruppe (270) sich mit der Nabe (234) in dem ersten Modus dreht, und so fixiert ist, dass die Nabe (234) sich in dem zweiten Modus unabhängig von der Spiralradbaugruppe (270) dreht.

7. Spannungsbaugruppe nach einem der Ansprüche 1 bis 6, wobei die Spannungsbaugruppe eine Ratsche (320) umfasst, die zumindest während des zweiten Modus betätigbar ist.

8. Spannungsbaugruppe nach Anspruch 7, wobei die Spannungsbaugruppe des Weiteren eine erste Ratschenklinke (322), eine zweite Ratschenklinke (324) und einen Ratschenselektor (250), der sich in Ansprechen auf die Drehung der Spannungsbaugruppe (200) dreht, um selektiv in eine von erster Ratschenklinke (322) oder zweiter Ratschenklinke (324) einzugreifen.

9. Spannungsbaugruppe nach einem der Ansprüche 1 bis 8, wobei die Bewegung des Modusumschaltmechanismus zwischen der ersten Stellung und der zweiten Stellung ohne Werkzeuge und ohne Bedienerkontakt mit dem Modusumschaltmechanismus erfolgt.

10. Spannungsbaugruppe nach einem der Ansprüche 1 bis 9, wobei die Spannungsbaugruppe (200) dazu ausgebildet ist, innerhalb einer Spannungsbaugruppesaufnahme (220) einer Kupplungsabdeckung der Kettensäge angeordnet zu werden, wobei die Spannungsbaugruppesaufnahme (220) eine Vielzahl von Zähnen (222) umfasst, die um einen inneren Umfang der Spannungsbaugruppesaufnahme (220) herum angeordnet sind, wobei in die Zähne (222) die Spannungsbaugruppe (200) in Ansprechen auf die Bewegung des Modusumschaltmechanismus in die zweite Stellung eingreift, um einen ersten Abschnitt der Spannungsbaugruppe relativ zu den Zähnen in Stellung zu verriegeln, während ein zweiter Abschnitt der Spannungsbaugruppe beweglich bleibt, um das Klemmen des Kettensägeblatts an dem Kettensägekörper zu erleichtern.

11. Spannungsbaugruppe nach einem der Ansprüche 1 bis 10, wobei die Spiralradbaugruppe (270) ein Spiralrad (272) umfasst, das einen Gewindeeingriff für einen Abschnitt des Kettensägeblatts bereitstellt, um die Einstellung der Kettenspannung in Ansprechen auf die Bewegung des Spiralrads (272) zu aktivieren, während der Modusumschaltmechanismus in der ersten Stellung ist.

12. Spannungsbaugruppe nach Anspruch 11, wobei der Modusumschaltmechanismus eine Schieberanordnung (340) umfasst, die dazu ausgebildet ist, in Ansprechen darauf, dass die Schieberanordnung (340) in der ersten Stellung ist, die Bewegung der Knopfbaugruppe (230) operativ mit dem Spiralrad (272) zu koppeln, und in Ansprechen darauf, dass die Schieberanordnung (340) in der zweiten Stellung ist, die Knopfbaugruppe (230) operativ von dem Spiralrad (272) zu entkoppeln.

13. Spannungsbaugruppe nach Anspruch 11 oder 12, wobei das Kettensägeblatt eine Vielzahl von Fortsätzen umfasst, in die der Reihe nach eine Gewindeanordnung (296) des Spiralrads in Ansprechen auf die Drehung der Knopfbaugruppe (230) in dem ersten Modus eingreift.

14. Spannungsbaugruppe nach einem der Ansprüche 1 bis 13, wobei die Spannungsbaugruppe (200) eine Vorspannfeder (380) umfasst, um den Modusumschaltmechanismus zu der ersten Stellung hin vorzuspannen, und wobei die Vorspannfeder in Ansprechen darauf, dass die Kettenspannung ein vorbestimmtes Maß erreicht, überwunden wird.

15. Kettensäge, die Folgendes umfasst:
einen Kettensägekörper;
ein Kettensägeblatt, das dazu ausgebildet ist, operativ mit einer Schneidkette gekoppelt zu sein; und
eine Kupplungsabdeckung, die proximal zu einem Abschnitt des Kettensägeblatts angeordnet ist, um das Klemmen des Kettensägeblatts an dem Kettensägekörper zu erleichtern,
**dadurch gekennzeichnet, dass** sie darüber hinaus umfasst:
eine Spannungsbaugruppe (200) nach einem der Ansprüche 1 bis 14, wobei die Spannungsbaugruppe in der Kupplungsabdeckung aufgenommen ist.

## Revendications

1. Sous-ensemble de tension (200) pour l'ajustement d'une tension de chaîne et d'une tension de serre-barre maintenant une barre de scie à chaîne (282) d'une scie à chaîne sur un corps de scie à chaîne de la scie à chaîne, le sous-ensemble de tension (200) comprenant :
un sous-ensemble de bouton (230) ; et
un sous ensemble de roue en spirale (270) couplé de manière fonctionnelle au sous-ensemble de came (240),
où le sous-ensemble de roue en spirale (270) comprend un mécanisme de changement de mode configuré pour se déplacer entre une première position dans laquelle le sous-ensemble de tension fonctionne dans un premier mode et une deuxième position dans laquelle le sous-ensemble de tension fonctionne dans un deuxième mode, le mécanisme de changement de mode permettant à la fois l'ajustement d'une tension de chaîne dans le premier mode de fonctionnement et le serrage de la barre de scie à chaîne (282) dans le deuxième mode de fonctionnement, **caractérisé en ce qu'**il est prévu en outre un sous-ensemble de came (240) couplé de manière fonctionnelle à l'ensemble de bouton (230) ;
où l'ajustement d'une tension de chaîne et le serrage de la barre de scie à chaîne (282) sont tous deux réalisés en faisant tourner le sous-ensemble de bouton (230).

2. Sous-ensemble de tension de la revendication 1, dans lequel le sous-ensemble de came (240) comporte une protubérance de came (390) qui passe d'une première position dans laquelle elle est disposée dans une première fente de réception de protubérance de came (360) du sous-ensemble de roue en spirale (270), à une deuxième position dans laquelle elle est disposée dans une deuxième fente de réception de protubérance de came (362) du sous-ensemble de roue en spirale (270), en réponse au mouvement du sous-ensemble de bouton (230) surmontant une force de sollicitation maintenant le mécanisme de changement de mode dans la première position.

3. Sous-ensemble de tension de la revendication 2, dans lequel le sous-ensemble de bouton (230) tourne pour ajuster une position axiale de la barre de scie à chaîne afin d'ajuster une tension de chaîne dans le premier mode, et tourne pour rapprocher le sous-ensemble de bouton (230) du corps de scie à chaîne afin d'ajuster une tension de serre-barre dans le deuxième mode.

4. Sous-ensemble de tension de la revendication 2 ou 3, dans lequel la protubérance de came (390) est configurée pour passer de la première fente de réception de protubérance de came (360) à la deuxième fente de réception de protubérance de came (362) en réponse au fait que la tension de chaîne atteint une valeur prédéterminée.

5. Sous-ensemble de tension de l'une des revendications 1 à 4, dans lequel le sous-ensemble de bouton (230) comprend un capuchon (232) et un moyeu (234) couplés l'un à l'autre de manière fonctionnelle, où le moyeu (234) tourne en réponse au mouvement du capuchon (232) jusqu'à ce qu'un couple de démarrage soit atteint par rapport au serrage de la barre de scie à chaîne, le moyeu ne tournant plus en réponse au mouvement du capuchon après que le couple de démarrage est atteint.

6. Sous-ensemble de tension de la revendication 5, dans lequel le moyeu (234) reçoit une partie du sous-ensemble de came (240) et une partie du sous-ensemble de roue en spirale (270), et où le sous-ensemble de roue en spirale (270) tourne avec le moyeu (234) dans le premier mode, et est fixé de telle sorte que le moyeu (234) tourne indépendamment du sous-ensemble de roue en spirale (270) dans le deuxième mode.

7. Sous-ensemble de tension de l'une des revendications 1 à 6, dans lequel le sous-ensemble de tension comprend une roue à rochet (320) pouvant fonctionner au moins pendant le deuxième mode.

8. Sous-ensemble de tension de la revendication 7, dans lequel le sous-ensemble de tension comprend en outre un premier cliquet (322), un deuxième cliquet (324) et un sélecteur de cliquet (250) qui tourne en réponse à la rotation du sous-ensemble de tension (200) afin de se mettre de manière sélective en prise avec le premier cliquet (322) ou le deuxième cliquet (324).

9. Sous-ensemble de tension de l'une des revendications 1 à 8, dans lequel un mouvement du mécanisme de changement de mode entre la première position et la deuxième position se produit sans outils et sans contact de l'opérateur avec le mécanisme de changement de mode.

10. Sous-ensemble de tension de l'une des revendications 1 à 9, dans lequel le sous-ensemble de tension (200) est configuré pour être disposé à l'intérieur d'un récepteur de sous-ensemble de tension (220) d'un carter d'embrayage de la scie à chaîne, le récepteur de sous-ensemble de tension (220) comprenant une denture (222) disposée autour d'une périphérie intérieure du récepteur de sous-ensemble de tension (220), la denture (222) se mettant en prise avec le sous-ensemble de tension (200) en réponse au mouvement du mécanisme de changement de mode à la deuxième position pour verrouiller une première partie du sous-ensemble de tension en position par rapport à la denture tandis qu'une deuxième partie du sous-ensemble de tension demeure mobile pour faciliter le serrage de la barre de scie à chaîne sur le corps de scie à chaîne.

11. Sous-ensemble de tension de l'une des revendications 1 à 10, dans lequel le sous-ensemble de roue en spirale (270) comprend une roue en spirale (272) qui fournit une mise en prise filetée à une partie de la barre de scie à chaîne pour permettre l'ajustement de la tension de chaîne en réponse au mouvement de la roue en spirale (272) tandis que le mécanisme de changement de mode est dans la première position.

12. Sous-ensemble de tension de la revendication 11, dans lequel le mécanisme de changement de mode comprend un ensemble coulisseau (340) configuré pour coupler de manière fonctionnelle un mouvement du sous-ensemble de bouton (230) à la roue en spirale (272) en réponse au fait que l'ensemble coulisseau (340) est dans la première position, et pour découpler de manière fonctionnelle le sous-ensemble de bouton (230) de la roue en spirale (272) en réponse au fait que l'ensemble coulisseau (340) est dans la deuxième position.

13. Sous-ensemble de tension de la revendication 11 ou 12, dans lequel la barre de scie à chaîne comprend une pluralité de protubérances qui se mettent séquentiellement en prise avec un ensemble à filetage (296) de la roue en spirale en réponse à la rotation du sous-ensemble de bouton (230) dans le premier mode.

14. Sous-ensemble de tension de l'une des revendications 1 à 13, dans lequel le sous-ensemble de tension (200) comprend un ressort de sollicitation (380) pour solliciter le mécanisme de changement de mode vers la première position, et où le ressort de sollicitation est surmonté en réponse au fait que la tension de chaîne atteint une valeur prédéterminée.

15. Scie à chaîne comprenant :
un corps de scie à chaîne ;
une barre de scie à chaîne configurée pour être couplée de manière fonctionnelle à une chaîne de coupe ; et
un carter d'embrayage disposé à proximité d'une partie de la barre de scie à chaîne pour faciliter le serrage de la barre de scie à chaîne sur le corps de scie à chaîne,
**caractérisé en ce qu'**elle comprend en outre
un sous-ensemble de tension (200) selon l'une des revendications 1 à 14, lequel sous-ensemble de tension est reçu dans le carter d'embrayage.
